# EUROPÄISCHE PATENTANMELDUNG

(11) **EP 2 767 727 A1**
(43) Veröffentlichungstag der Anmeldung: **20.08.2014**
(21) Anmeldenummer: 14150866.3
(22) Anmeldetag: 13.01.2014
(51) Int. Cl.: F16D 65/18

(54) **Feststellbremse für ein Fahrzeug**

(30) Priorität: 14.02.2013 DE 102013202412
(71) Anmelder: Siemens Aktiengesellschaft, 80333 München (DE)
(72) Erfinder: Bachmaier, Georg, 80469 München (DE); Fischer, Bernhard, 84513 Töging A. Inn (DE); Gödecke, Andreas, 81677 München (DE); Schmid, Thomas, 72622 Nürtingen (DE)

(57) **Zusammenfassung**

Eine Feststellbremse (10) für ein Fahrzeug, mit wenigstens einem Bremselement (12) und mit wenigstens einem Stellglied (20), mittels welchem das Bremselement (12) zwischen wenigstens einer zumindest ein Rad des Fahrzeugs blockierenden Bremsstellung als erster Stellung und wenigstens einer das Rad freigebenden Lösestellung als zweiter Stellung bewegbar ist, wobei das Stellglied (20) als magnetischer Aktor (20) mit wenigstens einem Magnetelement (24) ausgebildet ist, mittels welchem jeweilige magnetische Kräfte zum stabilen Halten des Bremselements (12) in beiden Stellungen bewirkbar sind.

## Beschreibung

Die Erfindung betrifft eine Feststellbremse für ein Fahrzeug gemäß dem Oberbegriff von Patentanspruch 1.

Derartige Feststellbremsen sind aus dem Serienbau von Kraftwagen, insbesondere von Personenkraftwagen, hinlänglich bekannt. Eine solche Feststellbremse wird üblicherweise auch als Parkbremse bezeichnet und dient dazu, das entsprechende Fahrzeug im Stand gegen unabsichtliche Bewegungen, beispielsweise Wegrollen, zu sichern. Dadurch kann das Fahrzeug beispielsweise an einer Steigung sicher geparkt werden, ohne dass es unerwünschterweise davonrollt.

Eine solche Parkbremse ist beispielsweise per Hand betätigbar und wird daher auch als Handbremse bezeichnet. Darüber hinaus ist es bekannt, eine solche Parkbremse per Fuß betätigen zu können.

Die Parkbremse ist üblicherweise zusätzlich zu einer sogenannten Betriebsbremse des Fahrzeugs vorgesehen. Im Gegensatz zur Parkbremse dient die Betriebsbremse nicht oder nicht nur dazu, das Fahrzeug im Stand gegen unerwünschte Bewegungen zu sichern. Vielmehr dient die Betriebsbremse dazu, das sich bewegende Fahrzeug abzubremsen, d.h. zu verlangsamen.

Die Feststellbremse umfasst wenigstens ein Bremselement, welches zwischen wenigstens einer zumindest ein Rad des Fahrzeugs blockierenden Bremsstellung als erster Stellung und wenigstens einer das Rad freigebenden Lösestellung als zweiter Stellung bewegbar ist. Aus dem allgemeinen Stand der Technik ist es bekannt, diese Bewegung des Bremselements mittels eines Seilzugs oder hydraulisch zu realisieren. Bei modernen Fahrzeugen werden allerdings zunehmend mechanische Systeme zum Bewegen des Bremselements durch elektromechanische Systeme ersetzt. Somit ist wenigstens ein Stellglied zum Bewegen des Bremselements zwischen den Stellungen vorgesehen.

Eine solche elektrische bzw. elektronische Aktuierung der Feststellbremse ermöglicht die Realisierung einer beispielsweise für den Fahrer des Fahrzeugs komfortablen Betätigung der Feststellbremse.

Üblicherweise umfasst das Stellglied bei einer solchen elektrischen bzw. elektromechanischen Aktuierung einen Elektromotor mit einem Getriebe und einem Spindelantrieb, wobei der Elektromotor beispielsweise als Gleichstromelektromotor ausgebildet ist. Der schnell drehende Elektromotor wird durch das Getriebe untersetzt, und eine Spindel des Spindelantriebs setzt rotatorische Bewegungen des Elektromotors in eine lineare bzw. translatorische Bewegung des Bremselements um.

Das Stellglied weist dabei eine sehr hohe Komplexität auf, woraus hohe Kosten sowie eine geringe Robustheit resultieren. So kann das Getriebe verschmutzen und ausfallen. Auch der Spindelantrieb kann verschleißen. Ferner können Vibrationen Fehlfunktionen herbeiführen. Auch der Elektromotor ist komplex aufgebaut, da er beispielsweise eine besondere Regelung, beispielsweise bei einem bürstenlosen Antrieb, erfordert oder eine Vielzahl von Verschleißteilen wie beispielsweise Kommutatoren und Bürsten aufweist. Auch dies führt zu hohen Kosten und einer relativ geringen Robustheit.

Es ist daher Aufgabe der vorliegenden Erfindung, eine Feststellbremse der eingangs genannten Art zu schaffen, welche eine geringe Komplexität aufweist sowie das Fahrzeug besonders gut gegen unerwünschte Bewegungen sichern kann.

Diese Aufgabe wird durch eine Feststellbremse mit den Merkmalen des Patentanspruchs 1 gelöst. Vorteilhafte Ausgestaltungen mit zweckmäßigen und nicht-trivialen Weiterbildungen der Erfindung sind in den übrigen Ansprüchen angegeben.

Eine solche Feststellbremse für ein Fahrzeug umfasst wenigstens ein Bremselement sowie wenigstens ein Stellglied. Mittels des Stellglieds ist das Bremselement zwischen wenigstens einer zumindest ein Rad des Fahrzeugs blockierenden Bremsstellung als erster Stellung und wenigstens einer das Rad freigebenden Lösestellung als zweiter Stellung bewegbar.

Erfindungsgemäß ist das Stellglied als magnetischer Aktor mit wenigstens einem Magnetelement ausgebildet, mittels welchem jeweilige magnetische Kräfte zum stabilen Halten des Bremselements in beiden Stellungen bewirkbar sind. Mit anderen Worten ist das Magnetelement mittels der jeweiligen magnetischen Kräfte sowohl in der Bremsstellung als auch in der Lösestellung gehalten. Der magnetische Aktor ist somit ein sogenannter bistabiler Magnetaktor ausgebildet, welcher in zwei Positionen, d.h. in den beiden Stellungen stabil ist. Somit kann das Magnetelement sicher und mit einem nur sehr geringen Aufwand in beiden Stellungen gehalten werden. Die erfindungsgemäße Feststellbremse weist somit eine nur sehr geringe Komplexität auf, so dass sich eine hohe Robustheit sowie nur sehr geringe Kosten der Feststellbremse realisieren lassen.

Zur Realisierung einer besonders hohen Funktionserfüllungssicherheit ist es bei einer vorteilhaften Ausführungsform der Erfindung vorgesehen, dass das Magnetelement als Permanentmagnet ausgebildet ist. Mittels des Permanentmagneten werden die magnetischen Kräfte zum Halten des Bremselements unabhängig von einer Stromversorgung des Fahrzeugs bewirkt. Somit kann das Bremselement in beiden Stellungen auch dann sicher gehalten werden, wenn die Stromversorgung des beispielsweise als Kraftwagen und insbesondere als Personenkraftwagen ausgebildeten Fahrzeugs ausfällt.

Ist das Fahrzeug beispielsweise an einer Steigung abgestellt und mittels des sich in der Bremsstellung befindenden Halteelements gegen ein unerwünschtes Davonrollen gesichert, und fällt die Stromversorgung des Fahrzeugs aus, so wird das Bremselement dennoch mittels des Permanentmagneten in der Bremsstellung gehalten, so dass das Fahrzeug nicht wegrollen kann.

Fährt das Fahrzeug beispielsweise auf einer Fahrbahn und kommt es zu einem plötzlichen Ausfall der Stromversorgung des Fahrzeugs, so wird das Bremselement dennoch mittels des Permanentmagneten in der Lösestellung gehalten. Eine plötzliche unerwünschte Bewegung des Bremselements aus der Lösestellung in die Bremsstellung während der Fahrt kann somit vermieden werden.

In besonders vorteilhafter Ausgestaltung der Erfindung umfasst der magnetische Aktor wenigstens eine Spule, mittels welcher das Halteelement zwischen den Stellungen (Lösestellung und Bremsstellung) bewegbar ist. Hierdurch ist eine elektrische Aktuierung des Bremselements geschaffen, so dass das Bremselement beispielsweise für einen Nutzer, insbesondere einen Fahrer, des Fahrzeugs besonders komfortabel zwischen den Stellungen bewegbar ist. Um das Bremselement zwischen den Stellungen zu bewegen, wird die elektrische Spule bestromt. Mit anderen Worten wird elektrischer Strom durch die Spule hindurch geleitet, um die Bewegung des Bremselements zu bewirken.

Durch diese elektrische Aktuierung kann eine komfortable sowie sichere Funktion der Feststellbremse realisiert werden, da beispielsweise eine überlagerte Steuerung und/oder Regelung der Feststellbremse möglich ist. Ferner kann die Feststellbremse als Hilfsaggregat rein elektrisch betrieben werden. Im Rahmen der Entwicklung von modernen Fahrzeugen ist eine solche, rein elektrische Betreibbarkeit von Hilfsaggregaten, insbesondere bei hybriden oder rein elektrischen Antriebssystemen von Hybrid-Fahrzeugen oder Elektrofahrzeugen, besonders vorteilhaft, um einen besonders effizienten Betrieb des Fahrzeugs realisieren zu können. Durch diese elektrische Aktuierung können auch eine wiederholte Umsetzung von elektrischer Energie in mechanische Energie sowie damit einhergehende Verluste und Systemkomplexitäten vermieden werden.

Als besonders vorteilhaft hat es sich gezeigt, wenn der magnetische Aktor ein Joch und ein relativ zu dem Joch bewegbares Ankerelement umfasst, zwischen welchen in den Stellungen die jeweiligen, mittels des Magnetelements bewirkbaren magnetischen Kräfte wirken. Mit anderen Worten sind das Joch und das Ankerelement aus einem magnetischen oder magnetisierbaren Material, insbesondere aus einem weichmagnetischen Material, gebildet und dienen zum Führen eines jeweiligen magnetischen Flusses zum Halten des Bremselements in den Stellungen. Dabei ist das Bremselement über das Ankerelement zwischen den Stellungen bewegbar. Mit anderen Worten ist das Bremselement mit dem Ankerelement gekoppelt oder koppelbar, so dass Bewegungen des Ankerelements relativ zum Joch auf das Bremselement übertragen werden können. Hierdurch kann das Bremselement zwischen den Stellungen bewegt werden, und die Komplexität und der Bauraumbedarf des magnetischen Aktors können besonders gering gehalten werden.

Eine weitere Ausführungsform zeichnet sich dadurch aus, dass das Ankerelement zumindest bereichsweise und/oder das Magnetelement in dem Joch aufgenommen ist. Mit anderen Worten fungiert das Joch als Gehäuse zum Aufnehmen des Magnetelements und/oder des Ankerelements. Dadurch lässt sich eine besonders hohe Kompaktheit des magnetischen Aktors und somit der Feststellbremse insgesamt realisieren.

Zur Realisierung eines besonders geringen Bauraumbedarfs des magnetischen Aktors ist es bei einer weiteren Ausführungsform der Erfindung vorgesehen, dass die Spule in dem Joch aufgenommen ist.

In weiterer vorteilhafter Ausgestaltung der Erfindung ist das Ankerelement am Joch relativ zu diesem bewegbar gelagert. Mit anderen Worten wird das Joch nicht nur zum Führen des magnetischen Flusses, sondern auch zum Lagern und zum Führen des Ankerelements bei dessen Bewegung verwendet. Somit kann die Teileanzahlung des magnetischen Aktors gering gehalten werden.

Als besonders vorteilhaft hat es sich gezeigt, wenn das Bremselement mit dem Ankerelement über eine Übersetzungseinrichtung gekoppelt ist. Mittels der Übersetzungseinrichtung sind von dem Magnetelement auf das Ankerelement zumindest mittelbar wirkende Kräfte, insbesondere zum Halten oder zum Bewegen des Ankerelements, in dem gegenüber größere, vom Ankerelement über die Übersetzungseinrichtung auf das Bremselement wirkende Kräfte, insbesondere zum Halten oder Bewegen des Bremselements, übersetzbar.

Mit anderen Worten wird das Bremselement beispielsweise über das Ankerelement und die Übersetzungseinrichtung mittels des Magnetelements bzw. der durch dieses bewirkbaren magnetischen Kräfte gehalten. Aufgrund der Übersetzungseinrichtung reicht es aus, dass vom Magnetelement auf das Ankerelement nur relativ geringe Haltekräfte wirken, da diese geringen Haltekräfte mittels der Übersetzungseinrichtung in dem gegenüber größere Haltekräfte übersetzt werden, welche zwischen dem Ankerelement und dem Bremselement über die Übersetzungseinrichtung wirken. In der Folge kann das Magnetelement hinsichtlich seines Gewichts und seiner Größe besonders leicht bzw. klein ausgestaltet werden. Dennoch können hohe Haltekräfte zum sicheren Halten des Magnetelements in zumindest einer der Stellungen realisiert werden.

Als besonders vorteilhaft hat es sich gezeigt, wenn die Übersetzungseinrichtung als hydraulische Übersetzungseinrichtung ausgebildet ist. Dadurch lassen sich besonders hohe Haltekräfte realisieren.

In weiterer vorteilhafter Ausgestaltung der Erfindung umfasst die Übersetzungseinrichtung zwei fluidisch miteinander verbundene und in ihrem jeweiligen Volumen veränderbare Arbeitskammern und eine in den Arbeitskammern aufnehmbare Flüssigkeit. Hierdurch kann eine besonders hohe Kraftübersetzung realisiert werden. Ferner ist eine besonders vorteilhafte Anordnung des Bremselements und des Jochs mit den Magnetelementen möglich. Die Arbeitskammern können beispielsweise über ein relativ langes, elastisches bzw. im Wesentlichen biegeschlaffes oder über ein eigensteifes Leitungselement miteinander verbunden sein, so dass die Arbeitskammer auf Seiten des Magnetelements und des Joches relativ weit von der Arbeitskammer auf Seiten des Bremselements beabstandet angeordnet werden kann. Hierdurch ist es beispielsweise möglich, das Joch und das Magnetelement in ansonsten ungenutztem Bauraum anzuordnen und beispielsweise in einem solchen Bereich anzuordnen, in dem das Joch und das Magnetelement vor Verschmutzung, Hitzebelastung und/oder anderweitigen Einflüssen geschützt sind.

Um die Komplexität der Feststellbremse besonders gering zu halten, ist das Bremselement als Reibbelag ausgebildet, welcher in der Bremsstellung in Stützanlage mit einer korrespondierenden Bremsscheibe des zu blockierenden Rads gehalten ist. Die Bremsscheibe ist dabei Bestandteil einer Betriebsbremse des Fahrzeugs. Die Bremsscheibe wird somit sowohl zum Sichern des Fahrzeugs gegen ein unerwünschtes Wegrollen als auch zum Abbremsen des sich bewegenden Fahrzeugs mittels der Betriebsbremse genutzt. Hierdurch kann die Teileanzahl des Fahrzeugs insgesamt besonders gering gehalten werden.

Schließlich hat es sich als vorteilhaft gezeigt, wenn ein mittels des Magnetelements in der Bremsstellung bewirkter magnetischer Fluss zum Halten des Bremselements in der Bremsstellung mittels der Bremsscheibe geführt ist. Hierzu ist die Bremsscheibe beispielsweise aus einem magnetischen oder magnetisierbaren Material und insbesondere aus einem weichmagnetischen Material gebildet. In Folge des Verwendens der Bremsscheibe zum Führen des magnetischen Flusses lässt sich ein besonders geringer Bauraumbedarf der Feststellbremse realisieren.

Weitere Vorteile, Merkmale und Einzelheiten der Erfindung ergeben sich aus der nachfolgenden Beschreibung bevorzugter Ausführungsbeispiele sowie anhand der Zeichnungen. Die vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen.

Die Zeichnungen zeigen in:
- FIG 1: ausschnittsweise eine schematische Längsschnittansicht einer Feststellbremse für ein Fahrzeug gemäß einer ersten Ausführungsform, wobei sich die Feststellbremse in einer Bremsstellung befindet;
- FIG 2: ausschnittsweise eine weitere schematische Längsschnittansicht der Feststellbremse, wobei sich die Feststellbremse in einer Lösestellung befindet;
- FIG 3: ausschnittsweise eine weitere schematische Längsschnittansicht der Feststellbremse gemäß einer zweiten Ausführungsform, wobei sich die Feststellbremse in ihrer Lösestellung befindet; und
- FIG 4: ausschnittsweise eine schematische Längsschnittansicht der Feststellbremse gemäß der zweiten Ausführungsform, wobei sich die Feststellbremse in ihrer Bremsstellung befindet.

In den Figuren sind gleiche oder funktionsgleiche Elemente mit gleichen Bezugszeichen versehen.

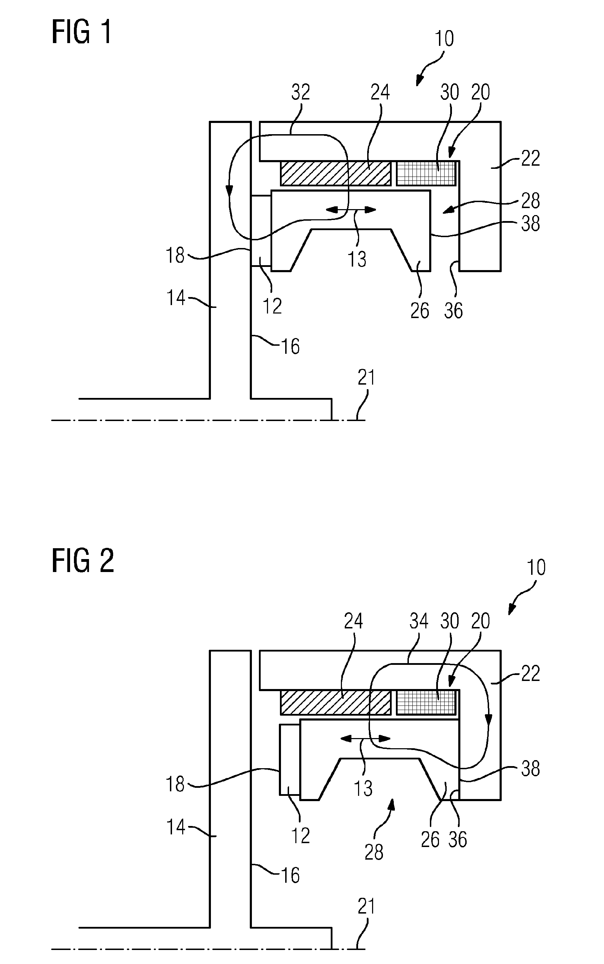

FIG 1 und 2 zeigen eine im Ganzen mit 10 bezeichnete Feststellbremse für ein Fahrzeug, beispielsweise einen Kraftwagen. Die Feststellbremse 10 umfasst wenigstens ein Bremselement, welches vorliegend als Reibbelag 12 ausgebildet ist. Der Reibbelag 12 ist zwischen wenigstens einer in FIG 1 gezeigten Bremsstellung und wenigstens einer in FIG 2 gezeigten Lösestellung bewegbar.

Wie aus FIG 1 erkennbar ist, wirkt der Reibbelag 12 in der Bremsstellung mit einer in FIG 1 und 2 ausschnittsweise erkennbaren Bremsscheibe 14 des Fahrzeugs zusammen. Dabei befindet sich eine einer Stirnseite 16 der Bremsscheibe 14 zugewandte Stirnseite 18 des Reibbelags 12 in Stützanlage mit der der Stirnseite 18 zugewandten Stirnseite 16. In Folge dieser Stützanlage bildet sich zwischen der Feststellbremse und der Bremsscheibe 14 eine Bremskraft in Form einer Reibkraft aus, durch welche ein zur Bremsscheibe 14 gehörendes Rad des Fahrzeugs blockiert ist.

Die Bremsscheibe 14 und das Rad, über welches das Fahrzeug auf einer Fahrbahn abrollen kann, sind drehfest miteinander verbunden und um eine Drehachse 21 drehbar, wenn sich der Reibbelag 12 in seiner Lösestellung (FIG 2) befindet. Befindet sich der Reibbelag 12 in seiner Bremsstellung, so ist eine solche Drehung der Bremsscheibe 14 und somit des zugehörigen Rads verhindert. Die Feststellbremse 10 ermöglicht es somit, das Fahrzeug beispielsweise an einer Steigung abzustellen bzw. zu parken und gegen ein unerwünschtes Wegrollen zu sichern.

Durch einen Doppelpfeil 13 ist die Bewegbarkeit des Reibbelags 12 zwischen der Lösestellung und der Bremsstellung veranschaulicht. Zum Bewegen des Reibbelags 12 zwischen der Lösestellung und der Bremsstellung umfasst die Feststellbremse 10 einen im Ganzen mit 20 bezeichneten magnetischen Aktor, welcher als bistabiler Magnetaktor ausgebildet ist. Der magnetische Aktor 20 umfasst ein Magnetjoch 22, ein Magnetelement in Form eines Permanentmagneten 24 und ein relativ zum Magnetjoch 22 bewegbares Ankerelement 26. Dabei ist das Ankerelement 26 linear bzw. translatorisch relativ zum Magnetjoch 22 bewegbar, was ebenfalls durch den Doppelpfeil 13 veranschaulicht ist.

Wie aus FIG 1 und 2 erkennbar ist, ist der Reibbelag 12 direkt mit dem Ankerelement 26 verbunden und dadurch mit dem Ankerelement 26 translatorisch mitbewegbar. Die Bewegung des Reibbelags 12 zwischen der Lösestellung und der Bremsstellung wird somit durch eine translatorische Bewegung des Ankerelements 26 relativ zum Magnetjoch 22 bewirkt.

Vorliegend fungiert das Magnetjoch 22 als Gehäuse und begrenzt einen Aufnahmeraum 28, in welchem das Ankerelement 26, der Permanentmagnet 24 sowie eine Spule 30 des magnetischen Aktors 20 angeordnet sind. Der Permanentmagnet 24 und die Spule 30 sind dabei am Magnetjoch 22 gehalten und relativ zum Magnetjoch 22 nicht bewegbar.

Das Magnetjoch 22 ist an einem Aufbau, insbesondere einer Karosserie, des Fahrzeugs relativ zum Aufbau unbewegbar gehalten, so dass auch der Permanentmagnet 24 und die Spule 30 über das Magnetjoch 22 aufbaufest gehalten sind.

Zumindest das Ankerelement 26 und das Magnetjoch 22 sind aus einem weichmagnetischen Material gebildet und können demzufolge zum Führen eines jeweiligen, in der Lösestellung und der Bremsstellung mittels des Permanentmagneten 24 bewirkten magnetischen Flusses verwendet werden, wobei dieser magnetische Fluss in FIG 1 und 2 anhand eines jeweiligen Magnetkreises 32, 34 veranschaulicht ist.

Bei der ersten Ausführungsform ist auch die Bremsscheibe 14 aus einem weichmagnetischen Material gebildet und wird in der Bremsstellung zum Führen des magnetischen Flusses verwendet.

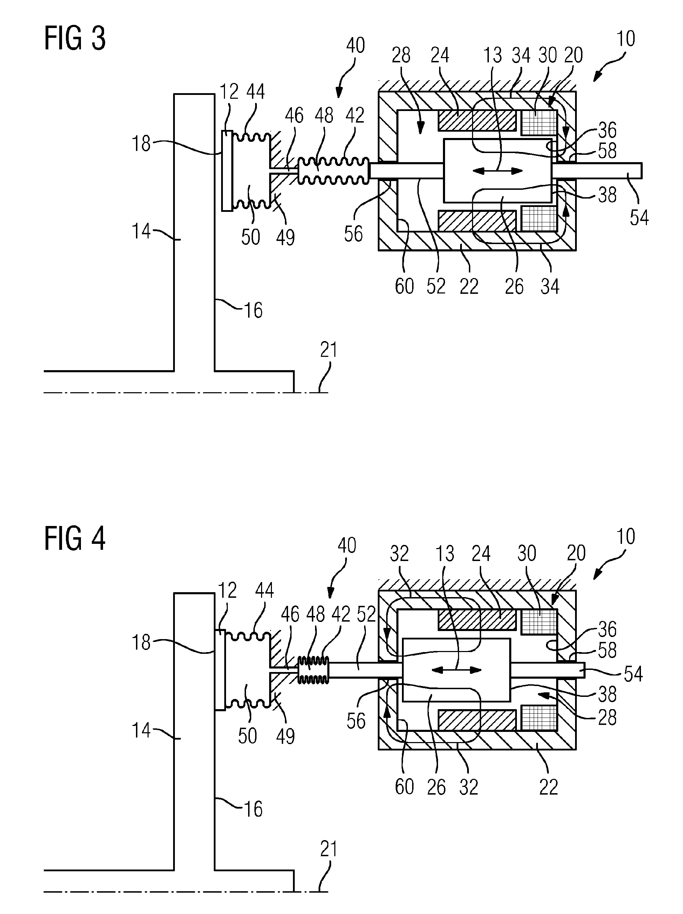

Wie im Zusammenhang mit FIG 3 und 4 noch erläutert wird, kann vorgesehen sein, dass das Ankerelement 26 an wenigstens einem, aus einem nicht magnetischen Material gebildeten Führungselement, beispielsweise in Form einer Führungsstange, angeordnet ist, wobei die Führungsstange mittels des Magnetjochs 22 geführt wird. Das Ankerelement 26 ist somit über das wenigstens eine, in FIG 1 und 2 nicht dargestellte Führungselement am Magnetjoch 22 relativ zu diesem bewegbar gelagert. Das Ankerelement 26 und mit diesem der Reibbelag 12 sind dabei in axialer Richtung, d.h. der Drehachse 21, bewegbar.

Der Permanentmagnet 24 ist vorliegend in radialer Richtung, d.h. senkrecht zur Drehachse 21 magnetisiert. Alternativ dazu kann der Permanentmagnet 24 jedoch auch in axialer Richtung magnetisiert sein. Die Spule 30 und das Ankerelement 26 sind in zumindest teilweiser gegenseitiger Überdeckung angeordnet. Wie aus FIG 1 und 2 erkennbar ist, ist das Ankerelement 26 in radialer Richtung nach außen zumindest teilweise durch die Spule 30 überdeckt.

Der bistabile Magnetaktor in Form des magnetischen Aktors 20 ist nun in zwei Positionen, d.h. sowohl in der Lösestellung als auch in der Bremsstellung stabil. Dies bedeutet, dass der Reibbelag 12 über das Ankerelement 26 sowohl in der Lösestellung als auch in der Bremsstellung mittels jeweiliger, durch den Permanentmagneten 24 bewirkter magnetischer Kräfte stabil gehalten ist.

Wie in FIG 2 erkennbar ist, kann der durch den Permanentmagneten 24 erzeugte und anhand des Magnetkreises 34 veranschaulichte, magnetische Fluss bezogen auf die Bildebenen von FIG 2 nach rechts durch das Magnetjoch 22 hindurch und über jeweilige Stirnseiten 36, 38 des Magnetjochs 22 bzw. des Ankerelements 26 in das Ankerelement 26 hineinfließen. Der magnetische Fluss fließt durch das Ankerelement 26 hindurch zurück zum Permanentmagneten 24. Diese Führung des magnetischen Flusses entsteht natürlich, d.h. ohne Bestromung der Spule 30, wenn sich das Ankerelement 26 in der Nähe der bezogen auf die Bildebene von FIG 1 und 2 rechten Stirnseite 36 des Magnetjochs 22 befindet. In diesem Fall wirkt - physikalisch durch das Bestreben des magnetischen Aktors 20, den Weg der Magnetfeldlinien zu verkürzen - eine nach rechts wirkende, magnetische Kraft, durch welche das Ankerelement 26 an die rechte Stirnseite 36 gezogen bzw. dort und somit in der Lösestellung gehalten wird.

Zum anderen kann der durch den Permanentmagneten 24 verursachte bzw. bewirkte magnetische Fluss - wie in Zusammenschau mit FIG 1 erkennbar ist - in gleicher Art nach links fließen. Dies entsteht natürlich, d.h. ohne Bestromung der Spule, wenn sich das Ankerelement 26 in der Nähe der Stirnseite 16 der Bremsscheibe 14 befindet. Der magnetische Fluss fließt hierbei ausgehend vom Permanentmagneten 24 durch das Magnetjoch 22, die Bremsscheibe 14 und das Ankerelement 26 zurück zum Permanentmagneten 24. Somit wirkt in diesem Fall eine bezogen auf die Bildebene von FIG 1 nach links wirkende, magnetische Kraft. Das Ankerelement 26 und mit diesem der Reibbelag 12 werden somit an die Stirnseite 16 der Bremsscheibe 14 gezogen bzw. dort und somit in der Bremsstellung gehalten.

Mittels der Spule 30 lässt sich nun durch Bestromung derselben ein zusätzliches magnetisches Feld erzeugen. Unter der Bestromung der Spule 30 ist zu verstehen, dass elektrischer Strom durch die Spule 30 hindurch geleitet wird. Indem sich dieses zusätzliche magnetische Feld mit dem des Permanentmagneten 24 überlagert, lässt sich zumindest kurzfristig eine Feldverteilung erzeugen, die den durch den Permanentmagneten 24 bewirkten magnetischen Fluss bezogen auf die Bildebene von FIG 1 und 2 nach links oder rechts lenkt - und zwar unabhängig von der Position des Ankerelements 26. Da auf diese Art und Weise nach Belieben eine Kraft nach links oder rechts auf das Ankerelement 26 ausgeübt werden kann, kann somit der bistabile Magnetaktor (magnetischer Aktor 20) umgeschaltet werden, d.h. das Ankerelement 26 und mit diesem der Reibbelag 12 können von links nach rechts oder umgekehrt bewegt werden.

Mit anderen Worten ist es möglich, durch Bestromen der Spule 30 den Reibbelag 12 über das Ankerelement 26 aus der Bremsstellung in die Lösestellung oder aus der Lösestellung in die Bremsstellung zu bewegen. Wird die Spule 30 nicht mehr bestromt, so wird das Ankerelement 26 und mit diesem der Reibbelag 12 in der Lösestellung bzw. in der Bremsstellung mittels der jeweiligen magnetischen Kräfte bzw. mittels des jeweiligen Magnetkreises 32, 34 sicher gehalten.

Der magnetische Aktor 20 lässt sich somit ohne äußeren Kraftangriff oder ohne Bestromung der Spule 30 nicht aus seinen beiden Endpositionen in Form der Bremsstellung und der Lösestellung des Reibbelags 12 heraus bewegen. In der Lösestellung und in der Bremsstellung wirkt somit eine jeweilige, magnetische Haltekraft auf das Ankerelement 26, mittels welcher der Reibbelag 12 sicher in der Lösestellung bzw. in der Bremsstellung gehalten wird.

Anstelle der Befestigung des Permanentmagneten 24 am Magnetjoch 22 kann auch vorgesehen sein, dass das Magnetelement vorliegend in Form des Permanentmagneten 24 am Ankerelement 26 mit diesem mitbewegbar angeordnet ist. Ferner kann vorgesehen sein, dass mehrere Spulen, d.h. zwei, drei oder eine noch größere Anzahl an Spulen verwendet werden. Vorzugsweise sind diese Spulen, wie es in FIG 1 und 2 am Beispiel der Spule 30 veranschaulicht ist, neben dem Permanentmagneten 24 angeordnet, wobei sie beispielsweise in axialer Richtung neben dem Permanentmagneten 24 bzw. dem Magnetelement angeordnet sind.

Das Magnetelement in Form des Permanentmagneten 24 des magnetischen Aktors 20 ist vorliegend einteilig ausgebildet. Alternativ dazu kann vorgesehen sein, dass das Magnetelement in mehrere Teile unterteilt ist. In diesem Fall umfasst das Magnetelement bzw. der Permanentmagnet 24 mehrere Magnetteile. In diesem Fall ist es vorzugsweise vorgesehen, dass die Spule 30 bzw. die mehreren Spulen zwischen den Magnetteilen angeordnet sind.

Bei der anhand von FIG 1 und 2 veranschaulichten ersten Ausführungsform der Feststellbremse 10 ist der Reibbelag 12 direkt am Ankerelement 26, d.h. ohne Vermittlung beispielsweise einer Übersetzungseinrichtung angeordnet. Hierdurch kann eine besonders einfache mechanische Konstruktion realisiert werden.

Da die Führung des magnetischen Flusses in der Lösestellung nicht mittels der Bremsscheibe 14 erfolgt, ist die Bremsscheibe feldfrei. Daher kommt es zu keiner Wirbelstrombildung in der Bremsscheibe 14, so dass bei einer Rotation der Bremsscheibe 14 relativ zum magnetischen Aktor 20 entstehende Verlustleistungen vermieden werden können.

Durch die Einbeziehung der Bremsscheibe 14 bei der Feldführung in der Bremsstellung kann das feldführende Magnetjoch 22 besonders klein und kompakt ausgeführt werden, so dass die Kosten und das Gewicht des magnetischen Aktors 20 gering gehalten werden können. Hierbei wird die Haltekraft und somit die Anpresskraft zum Anpressen des Reibbelags 12 an die Bremsscheibe 14 durch den Permanentmagneten 24 aufgebracht. Zur Realisierung einer Anpresskraft von beispielsweise 250 Dekanewton (daN) weist der Permanentmagnet 24 beispielsweise ein Gewicht von ca. 300 Gramm auf.

Um eine hohe Anpresskraft sowie gleichzeitig ein besonders geringes Gewicht des Permanentmagneten 24 realisieren zu können, ist es bei einer anhand von FIG 3 und 4 veranschaulichten, zweiten Ausführungsform der Feststellbremse 10 vorgesehen, dass der Reibbelag 12 über eine Übersetzungseinrichtung 40 mit dem Ankerelement 26 gekoppelt ist.

Bei der zweiten Ausführungsform ist somit eine indirekte Anbindung des Reibbelags 12 am Ankerelement 26 vorgesehen. Jedoch erfolgt auch bei der zweiten Ausführungsform die Bewegung des Reibbelags 12 durch die Bewegung des Ankerelements 26.

Mittels der Übersetzungseinrichtung 40 sind von dem Permanentmagneten 24 auf das Ankerelement 26 wirkende Kräfte, beispielsweise zum Bewegen und insbesondere zum Halten des Ankerelements 26, in demgegenüber größere, vom Ankerelement 26 über die Übersetzungseinrichtung 40 auf den Reibbelag 12 wirkende Kräfte, insbesondere zum Bewegen und insbesondere zum Halten des Reibbelags 12 in der in FIG 4 gezeigten Bremsstellung, zu übersetzen. Mit anderen Worten ist mittels der Übersetzungseinrichtung 40 eine Übersetzung dargestellt, so dass der Permanentmagnet 24 eine relativ geringe Anpresskraft aufbringen muss, wobei der Reibbelag 12 mit einer demgegenüber wesentlich höheren Anpresskraft gegen die Bremsscheibe gehalten wird.

Ist beispielsweise eine Übersetzung von 1:5 vorgesehen, so ist die Haltekraft, mittels welcher der Reibbelag 12 in der Bremsstellung gehalten wird, fünf Mal größer als die Anpresskraft, welche von dem Permanentmagneten 24 aufgebracht werden muss. Demzufolge kann ein hinsichtlich seines Gewichts wesentlich leichterer Permanentmagnet als bei der ersten Ausführungsform verwendet werden. Somit reicht beispielsweise zur Realisierung einer Haltekraft von 250 Dekanewton, mit welcher der Reibbelag 12 gegen die Bremsscheibe 14 gehalten wird, ein Gewicht des Permanentmagneten 24 von beispielsweise 60 Gramm aus.

In FIG 3 und 4 sind die zuvor genannten und mit 52 und 54 bezeichneten Führungsstangen erkennbar, über welche das Ankerelement 26 am als Gehäuse fungierenden Magnetjoch 22 relativ zum Magnetjoch 22 translatorisch bewegbar gelagert ist. Dazu sind die Führungsstangen 52, 54 in jeweiligen Aufnahmeöffnungen 56, 58 des Magnetjochs 22 aufgenommen, wobei die Aufnahmeöffnungen 56, 58 vorliegend als Durchgangsöffnungen ausgebildet sind. Die Führungsstangen 52, 54 sind über die Durchgangsöffnungen aus dem Aufnahmeraum 28 an die Umgebung des Magnetjochs 22 herausgeführt.

Die Übersetzungseinrichtung 40 ist vorliegend als hydraulischer Hubübersetzer ausgebildet. Die Übersetzungseinrichtung 40 umfasst einen beispielsweise metallischen Antriebsbalg 42 sowie einen beispielsweise metallischen Abtriebsbalg 44. Der Antriebsbalg 42 und der Abtriebsbalg 44 begrenzen eine jeweilige Arbeitskammer 48, 50, deren jeweilige Volumina veränderbar sind und die über ein Leitungselement 46 der Übersetzungseinrichtung 40 fluidisch miteinander verbunden sind. Der Antriebsbalg 42 und der Abtriebsbalg 44, welche im Folgenden auch als Bälge bezeichnet werden, sind zum Verändern der jeweiligen Volumina der Arbeitskammern 48, 50 komprimierbar und elongierbar.

Der Abtriebsbalg 44 ist einerseits an einem aufbaufesten Anschlag 49 abgestützt und andererseits mit dem Reibbelag 12 verbunden. Bewegt sich nun der Reibbelag 12 relativ zum Anschlag 49 zwischen seiner Lösestellung und seiner Bremsstellung, so wird die Arbeitskammer 50 in ihrem Volumen vergrößert oder verkleinert. Der Antriebsbalg 42 ist einerseits mit der Führungsstange 52 gekoppelt und über die Führungsstange 52 mit dem Ankerelement 26 gekoppelt bzw. an diesem abgestützt. Andererseits ist der Antriebsbalg 42 am Anschlag 49 abgestützt.

Bewegt sich nun das Ankerelement 26 relativ zum Magnetjoch 22, so wird der Antriebsbalg 42 komprimiert oder elongiert, so dass die Arbeitskammer 48 in ihrem Volumen verändert wird.

Der Abtriebsbalg 44 ist nun in seinem Durchmesser größer als der Antriebsbalg 42. Daraus resultiert eine entsprechende Übersetzung der Übersetzungseinrichtung 40, welche aufgrund der hydraulischen Gesetzmäßigkeiten aus dem Verhältnis der Querschnittsflächen der beiden Bälge abhängt. Als Hydraulikflüssigkeit bzw. als hydraulisches Fluid wird beispielsweise ein Silikonöl oder Glyzerin verwendet.

Wird die Arbeitskammer 48 in ihrem Volumen verkleinert, da sich beispielsweise das Ankerelement 26 von rechts nach links bewegt, so wird das hydraulische Fluid aus der Arbeitskammer 48 heraus und in die Arbeitskammer 50 hinein gepresst. Daraus resultiert eine Volumenvergrößerung der Arbeitskammer 50, so dass der Reibbelag 12 aus seiner Lösestellung nach links in seine Bremsstellung bewegt wird.

Das Leitungselement 46 kann ein starres bzw. eigensteifes Leitungselement sein. Alternativ dazu ist es möglich, dass das Leitungselement 46 ein flexibles bzw. im Wesentlichen biegeschlaffes und somit biegbares Leitungselement ist.

Der bistabile Magnetaktor (magnetischer Aktor 20) ist gemäß der zweiten Ausführungsform als eine kompakte Einheit ausgeführt, die das jeweilige magnetische Feld intern kapselt. Die Bewegung des Ankerelements 26 kontrahiert bzw. elongiert den Antriebsbalg 42, wodurch das hydraulische Fluid aus der Arbeitskammer 48 verdrängt bzw. in diese eingesogen wird. Aufgrund der hydraulischen Verbindung wird das verdrängte oder eingesogene Fluid mit dem Abtriebsbalg 44 ausgetauscht, der dann die jeweils entgegen gesetzte Bewegung ausführt. Durch Elongation des Abtriebsbalgs 44 wird der Reibbelag 12 gegen die Bremsscheibe 14 gepresst. Durch Kontraktion wird die Feststellbremse 10 gelöst.

Der Antriebsbalg 42 und der Abtriebsbalg 44 müssen nicht notwendigerweise in unmittelbarer örtliche Nähe zueinander angebracht werden. Der Antriebsbalg 42 kann beispielsweise zusammen mit dem magnetischen Aktor 20 an einer geometrisch günstigen Stelle im Fahrzeug installiert werden. Die fluidische Verbindung der Arbeitskammern 48, 50 kann über eine flexible Hydraulikleitung erfolgen.

Alternativ zur geschilderten, hydraulischen Übersetzungseinrichtung 40 kann auch eine mechanische Übersetzungseinrichtung beispielsweise mit wenigstens einem mechanischen Hebel eingesetzt werden, um die geschilderte Kraftübersetzung zu realisieren. Durch die Verwendung einer solchen Übersetzungseinrichtung 40 kann der magnetische Aktor 20 besonders klein und kompakt ausgeführt werden.

Wie aus einer Zusammenschau von FIG 1 bis 4 erkennbar ist, wird bei der zweiten Ausführungsform die Bremsscheibe 14 nicht zum Führen des magnetischen Flusses verwendet. Demzufolge kann die Bremsscheibe 14 aus einem nichtmagnetischen Material gebildet sein. Die Rollen der Stirnseite 16 bzw. der Bremsscheibe 14, um das Ankerelement 26 bezogen auf die Bildebene von FIG 3 und 4 nach links in die Bremsstellung zu bewegen, übernimmt bei der zweiten Ausführungsform eine linke Stirnseite 60 des Magnetjochs 22. Ein weiterer Vorteil des magnetischen Aktors 20 liegt insbesondere darin, dass direkt ein linearer Vortrieb des Ankerelements 26 erzeugt werden kann. Dieser lineare Vortrieb kann dann besonders günstig an den Reibbelag 12 übertragen werden, um auch diesen linear zu bewegen. Eine verlustbehaftete Umsetzung von einer rotatorischen in eine lineare Bewegung ist nicht erforderlich und nicht vorgesehen. Darüber hinaus weist der magnetische Aktor 20 eine besonders geringe Komplexität auf, da er eine besonders geringe Anzahl an bewegten Bauteilen in Form der Anker-Baugruppe inklusive des Reibbelags 12 bzw. in Form des Ankerelements 26 und Reibbelags 12 umfasst. Dadurch ist im Gegensatz zu einer besonders hohen Anzahl an bewegten Bauteilen, beispielsweise eines Elektromotors mit einem Getriebe, eine wesentlich einfache Konstruktion möglich. Somit kann eine besonders hohe Funktionserfüllungssicherheit realisiert werden. Des Weiteren weist der magnetische Aktor 20 einen sehr einfachen Aufbau auf, da er im einfachsten Fall lediglich das Magnetjoch 22, das Ankerelement 26, den Permanentmagneten 24 und die Spule 30 umfasst. Dies ist im Vergleich zu einem Gleichstrom-Elektromotor mit einem Getriebe- sowie Spindelantrieb weit weniger aufwändig, so dass der magnetische Aktor 20 besonders kostengünstig herzustellen ist.

Die Bewegung des Ankerelements 26 ist linear und erfolgt mit einer relativ geringen Geschwindigkeit. In der Folge können kostengünstige und robuste Lager verwendet werden. Darüber hinaus ist der magnetische Aktor 20 bistabil. Damit ist er eigensicher, denn es ist weder eine äußere Kraft noch eine Energieversorgung notwendig, um ihn im geschlossenen oder geöffneten Zustand zu halten. Lediglich für die Bewegung des Reibbelags 12 zwischen den Stellungen ist eine Energiezufuhr erforderlich. Dies bedeutet, dass die Feststellbremse 10 bei einem Energieausfall weder das fahrende Fahrzeug blockieren noch sich bei abgestelltem Fahrzeug plötzlich lösen kann.

Zur Betätigung des Ankerelements 26 und somit des Reibbelags 12 ist lediglich ein kurzer Stromimpuls auf die Spule 30 erforderlich, welche statisch, d.h. aufbaufest verbaut ist. Es ist also keine, beispielsweise mechanische oder elektronische Kommutierung des Stroms wie bei einem Elektromotor erforderlich mit daraus resultierenden Vorteilen hinsichtlich der Kosten, der Komplexität und der Fehleranfälligkeit.

Da bei der ersten Ausführungsform eine übersetzungsfreie Bewegung des Reibbelags 12 vorgesehen ist, fallen keine zusätzlichen mechanischen Verluste an, wie sie etwa durch ein Getriebe verursacht würden. Der Einsatz des hydraulischen Hubübersetzers ist insofern vorteilhaft, als eine hohe Robustheit durch die metallische Kapselung des hydraulischen Fluids realisierbar ist. Darüber hinaus weist der hydraulische Hubübersetzer ein sehr gutes Dämpfungsverhalten, ein gut gedämpftes Eigenschwingen sowie eine kompakte Bauweise auf.

Darüber hinaus weist der magnetische Aktor 20 eine sehr flexible Einbaubarkeit bzw. Montierbarkeit auf, da der Antriebsbalg 42 und der Abtriebsbalg 44 lediglich durch wenigstens eine hydraulische Leitung miteinander verbunden werden. Zum einen kann der magnetische Aktor 20 somit an einem vorteilhaften Ort angeordnet werden. Bei einem Direktantrieb des Rads, bei welchem das Rad beispielsweise mittels eines im Rad verbauten Elektromotors, d.h. mittels eines sogenannten Nabenmotors, angetrieben wird, kann dies beispielsweise hinter dem Elektromotor zur Fahrzeugmitte hin verschoben sein, wo üblicherweise ausreichend Platz vorhanden ist. Zum anderen könnte der magnetische Aktor 20 sogar am gefederten Aufbau angeordnet werden. Dadurch ist eine direkte Anbringung am Rad vermieden, so dass eine unerwünschte Erhöhung der ungefederten Massen vermieden werden kann. Dabei wird beispielsweise zur fluidischen Kopplung der Arbeitskammern 58, 50 eine flexible Hydraulikleitung zum Rad geführt.

## Patentansprüche

1. Feststellbremse (10) für ein Fahrzeug, mit wenigstens einem Bremselement (12) und mit wenigstens einem Stellglied (20), mittels welchem das Bremselement (12) zwischen wenigstens einer zumindest ein Rad des Fahrzeugs blockierenden Bremsstellung als erster Stellung und wenigstens einer das Rad freigebenden Lösestellung als zweiter Stellung bewegbar ist, **dadurch gekennzeichnet, dass** das Stellglied (20) als magnetischer Aktor (20) mit wenigstens einem Magnetelement (24) ausgebildet ist, mittels welchem jeweilige magnetische Kräfte zum stabilen Halten des Bremselements (12) in beiden Stellungen bewirkbar sind.

2. Feststellbremse (10) nach Anspruch 1, **dadurch gekennzeichnet, dass** das Magnetelement (24) als Permanentmagnet (24) ausgebildet ist.

3. Feststellbremse (10) nach einem der Ansprüche 1 oder 2, **dadurch gekennzeichnet, dass** der magnetische Aktor (20) wenigstens eine Spule (30) umfasst, mittels welcher das Bremselement (12) zwischen den Stellungen bewegbar ist.

4. Feststellbremse (10) nach einem der vorhergehenden Ansprüche, **dadurch gekennzeichnet, dass** der magnetische Aktor (20) ein Joch (22) und ein relativ zu dem Joch (22) bewegbares Ankerelement (26) umfasst, zwischen welchen in den Stellungen die jeweiligen, mittels des Magnetelements bewirkbaren magnetischen Kräfte wirken, wobei das Bremselement (12) über das Ankerelement (26) zwischen den Stellungen bewegbar ist.

5. Feststellbremse (10) nach Anspruch 4, **dadurch gekennzeichnet, dass** das Ankerelement (26) zumindest bereichsweise und/oder das Magnetelement (24) in dem Joch (22) aufgenommen ist.

6. Feststellbremse (10) nach einem der Ansprüche 4 oder 5 in dessen Rückbezug auf Anspruch 3, **dadurch gekennzeichnet, dass** die Spule (30) in dem Joch (22) aufgenommen ist.

7. Feststellbremse (10) nach einem der Ansprüche 4 bis 6, **dadurch gekennzeichnet, dass** das Ankerelement (26) am Joch (22) relativ zu diesem bewegbar gelagert ist.

8. Feststellbremse (10) nach einem der Ansprüche 4 bis 7, **dadurch gekennzeichnet, dass** das Bremselement (12) mit dem Ankerelement (26) über eine Übersetzungseinrichtung (40) gekoppelt ist, mittels welcher von dem Magnetelement (24) auf das Ankerelement (26) wirkende Kräfte in demgegenüber größere, vom Ankerelement (26) über die Übersetzungseinrichtung (40) auf das Bremselement (12) wirkende Kräfte übersetzbar sind.

9. Feststellbremse (10) nach Anspruch 8, **dadurch gekennzeichnet, dass** die Übersetzungseinrichtung (40) als hydraulische Übersetzungseinrichtung (40) ausgebildet ist.

10. Feststellbremse (10) nach Anspruch 9, **dadurch gekennzeichnet, dass** die Übersetzungseinrichtung (40) zwei fluidisch miteinander verbundene und in ihrem jeweiligen Volumen veränderbare Arbeitskammern (48, 50) und eine in den Arbeitskammern (48, 50) aufnehmbare Flüssigkeit umfasst.

11. Feststellbremse (10) nach einem der vorhergehenden Ansprüche, **dadurch gekennzeichnet, dass** das Bremselement (12) als Reibbelag (12) ausgebildet ist, welcher in der Bremsstellung in Stützanlage mit einer korrespondierenden Bremsscheibe (14) des zu blockierenden Rads gehalten ist.

12. Feststellbremse (10) nach Anspruch 11 in dessen Rückbezug auf einen der Ansprüche 4 bis 10, **dadurch gekennzeichnet, dass** ein mittels des Magnetelements (24) in der Bremsstellung bewirkter magnetischer Fluss zum Halten des Bremselements (12) in der Bremsstellung mittels der Bremsscheibe (14) geführt ist.
